Europäisches Patentamt

European Patent Office

Office européen des brevets

(19)

(11) Publication number: **0 389 278**
**A2**

# EUROPEAN PATENT APPLICATION

(21) Application number: **90303073.2**

(22) Date of filing: **22.03.90**

(51) Int. Cl.⁵: **B60H 1/32, B60P 3/20,**
**B65D 88/74**

(30) Priority: **22.03.89 GB 8906564**

(43) Date of publication of application:
**26.09.90 Bulletin 90/39**

(84) Designated Contracting States:
**BE DE DK ES FR GB IT NL**

(71) Applicant: **YORK TRAILER COMPANY LIMITED**
**Yafforth Road**
**Northallerton North Yorkshire, DL7 8UE(GB)**

(72) Inventor: **Endelin, Claude**
**42 Ter, Route de Macon**
**F-71450 Blanzy(FR)**

(74) Representative: **Allen, Oliver John Richard et**
**al**
**Lloyd Wise, Tregear & Co. Norman House**
**105-109 Strand**
**London, WC2R 0AE(GB)**

(54) **Improvements in and relating to refrigerated vehicles or containers.**

(57) A refrigerated vehicle or container having a load-carrying pace and a temperature control unit secured to an end bulkhead of the load-carrying space and communicating with the load-carrying space, the temperature control unit comprising means for heating and/or cooling air and an air circulation means, wherein a recess is provided in the end bulkhead to provide a return path for air passed to the load-carrying space by the air circulation means. This arrangement enables the load-carrying capacity of the vehicle or container to be maximised as compared with previous arrangements.

EP 0 389 278 A2

This invention relates to vehicles for the transportation of goods which have to be maintained at a fixed temperature. Such vehicles are often referred to as refrigerated vehicles even though they may in fact be employed to keep goods at a higher than ambient temperature if the goods are the type that will be detrimentally affected by extreme cold and/or frost. The vehicles may be in the form of, for example, lorries trailers, semi-trailers or vans. The invention also relates to refrigerated containers.

Refrigerated vehicles or containers comprise an insulated load-carrying space which may be divided into a number of compartments by bulkheads. A refrigeration unit and/or heater is provided for cooling and/or heating the load-carrying space. Known vehicles or containers include a false bulkhead spaced from the front bulkhead to provide a chamber in which is mounted an air circulation means for example, a fan. The refrigeration unit and/or heater may also be mounted in this chamber, or one or other may be mounted externally in a casing connected to the chamber. The chamber is connected to the load carrying space by an air outlet and inlet duct to allow cooled or heated air to be circulated from the chamber, through the load-carrying space and back to the chamber. This arrangement has the drawback that the load-carrying capacity of the vehicle or container is reduced.

In an alternative arrangement, both the air circulation means and the refrigeration unit and/or heater are mounted in an aperture cut through the front bulkhead in a position such that they do not significantly protrude into the load-carrying space, and are enclosed by a casing secured around the aperture to the exterior surface of the front bulkhead. Heated or cooled air is expelled into the load carrying space near the top thereof through the load-carrying space and the goods. Air adjacent the front bulkhead, is sucked into the refrigeration unit or heater for cooling or heating.

If the load-carrying space is divided into a number of compartments then various systems are known for heating and/or cooling these compartments. In one system employed with the arrangements described above, the dividing bulkheads are equipped with ducts extending therethrough, in which are located fans. The compartment at the front of the vehicle or container is maintained at the coldest temperature and the other compartments are cooled by transfer of air from the coldest compartment to those through the bulkhead ducts.

One problem which arises with both the single and mult-compartmental arrangements in which the temperature control means are located in an aperture in the front bulkhead is that although the load-carrying capacity is greater than with the arrangement in which a false bulkhead is employed, it is still not maximised. This is because the temperature control means is located in the upper portion of the front bulkhead to allow passage of heated or cooled air into the top of the load-carrying space above the goods carried therein. A gap has then to be provided between the goods and the front bulkhead to allow for the passage of air sucked from below the goods into the temperature control unit. The need to provide this gap means that less goods can be carried. This problem can also arise with the arrangement employing a false bulkhead if air has to be sucked up the front of the bulkhead to return it to the chamber.

A refrigerated vehicle or container in accordance with the invention has a load-carrying space and a temperature control until secured to an end bulkhead of the load-carrying space and communicating with the load-carrying space, the temperature control unit comprising means for heating and/or cooling air and an air circulation means, wherein a recess is provided in the end bulkhead to provide a return path for air passed to the load-carrying space by the air circulation means.

The advantage of this is that the need for an air gap is obviated and consequently the load-carrying capacity of the vehicle or container can be maximised.

The end bulkhead of the load-carrying space may be that of the container or vehicle, in which case the temperature control unit is enclosed by an externally mounted casing. Alternatively the end bulkhead may be a false, bulkhead provided adjacent the front bulkhead of the container or vehicle, in which the case the temperature control unit may be positioned between the two bulkheads.

The temperature control unit may either be mounted in an aperture in the end bulkhead, or in a position where it communicates with such an aperture, or a discharge duct and a return duct can be provided to connect the temperature control unit with the load-carrying space. In the third case, the recess in the end bulkhead will communicate with the return duct.

Suitably the recess is provided by making a portion of the end bulkhead of reduced thickness. In one preferred embodiment the lower half of the end is of reduced thickness. Alternatively the end bulkhead may be of constant thickness with a portion thereof set back to provide the recess.

Means may be provided for dividing the recess into a series of channels, so positioned as to help direct air passing along the return path into the temperature control unit.

The container or vehicle may have dividing means, preferably movable bulkheads, so that the load-carrying space can be divided into a number of compartment.

The invention will now be further described by way of example with reference to the accompanying drawings in which:-

Figure 1 is a side sectional view of a known refrigerated vehicle or container;

Figure 2 is a side sectional view of a refrigerated vehicle or container in accordance with the invention;

Figure 3 is a sectional view of the end bulkhead of the refrigerated vehicle or container of Figure 2 taken along the line III - II, and,

Figure 4 is a prospective view of an end bulkhead of an alternative embodiment of a vehicle or container in accordance with the invention.

The refrigerated vehicle or container 2 shown in the Figures comprises a load-carrying space 4 in which cargo 6 is carried. The walls 8 which are known as bulkheads of the vehicle or container 2 are formed from panels of an insulating material, for example, polyvinyl chloride, provided on one or both sides with a protective skin of, for example, plywood or metal. These serve to insulate the load-carrying space 4 to help keep the cargo 6 at the required temperature.

To raise or lower the temperature of the load-carrying space 4, a temperature control unit 10 is provided. The temperature control unit 10 is mounted in an aperture 12 of an end bulkhead 14 of the vehicle or container 2 and is isolated from the atmosphere by a casing 16. The temperature control unit 10 comprises a housing 17 containing a heater and/or a refrigeration unit and an air circulation means, for example, a fan. In place of a separate heater and/or refrigeration unit a heat exchanger which can alternately heat and cool air may be employed.

The air circulation means serves to discharge heated or cooled air through a first opening in the housing 17 into the top of the load-carrying space 4, see arrows 18. The air passes down through the cargo 6 which is supported on plinths 20 and is sucked back, see arrows 21, into the temperature control unit 10 through a second opening in the housing 17.

In the known refrigerated vehicle or container 2 a gap 22 has to be provided between the end bulkhead 14 and the cargo 6 to allow for the return of the air to the temperature control unit 10 to ensure good air flow and therefore adequate maintenance of the temperature of the cargo 6.

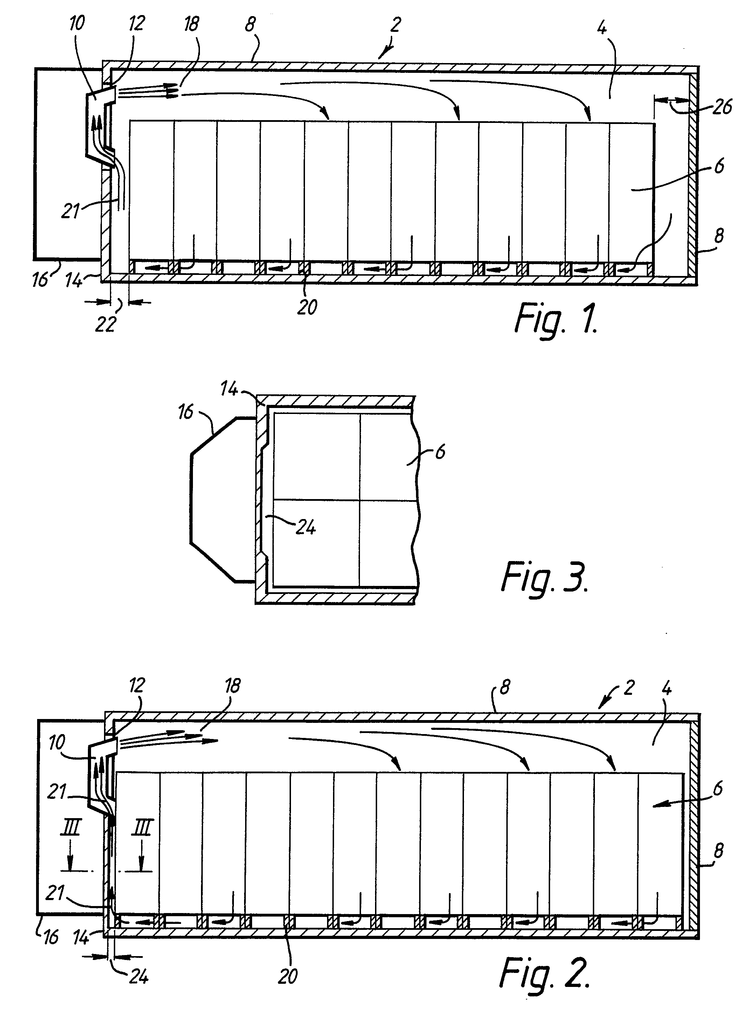

In the refrigerated vehicle or container 2 in accordance with the invention shown in Figures 2 to 4 a recess 24 in the end bulkhead 14 provides a return path for the air.

The recess 24 may be provided by making a portion of the end bulkhead 14 thinner than the remainder (see Figure 3). Alternatively the end bulkhead 14 may be of constant width and part may be set back to provide the recess.

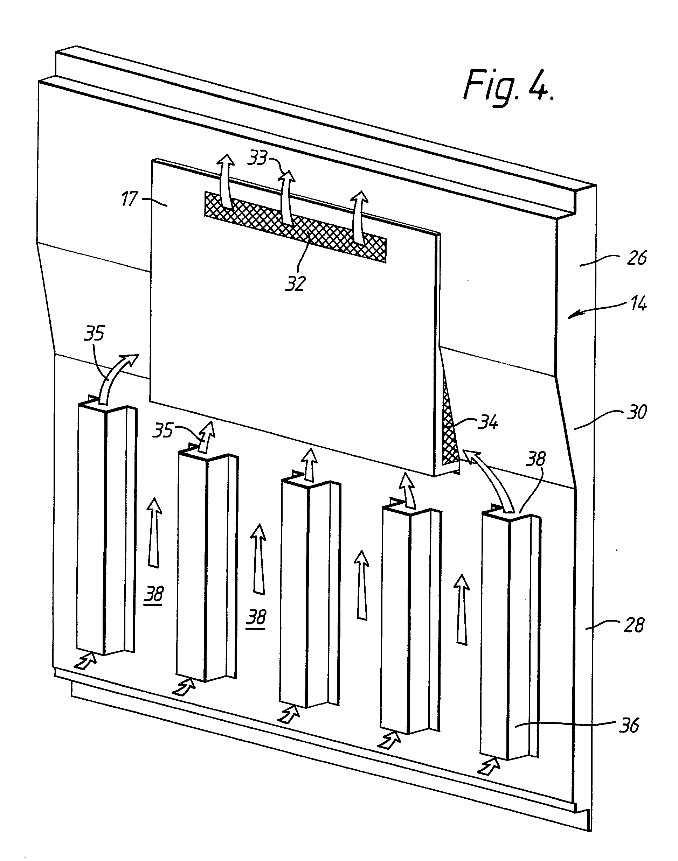

In the embodiment illustrated in Figure 4, the end bulkhead 14 has an upper portion 26 and, to provide the recess, a lower thinner portion 28, the thickness of the intermediate portion 30 connecting the two gradually decreasing between the upper and lower portions 26, 28 to give a sloping face. The housing 17 of the temperature control unit 10 sits in an aperture in the end bulkhead 14. The housing 17 contains a grill 32 in the upper section thereof through which heated or cooled air can be passed to the load-carrying space 4, see arrows 33. Further grills 34 at the lower sides and bottom of housing 17 allow air to be passed to the air circulation means and heater/refrigeration unit from below the cargo 6, see arrows 35. The sloping of the central portion of the 30 allows air to be passed through the grills 34 from the load carrying space 4 but without intrusion of the housing 17 thereinto. U sections 36 are secured to the lower portion 28 of the bulkhead 14 to divide the recess into a series of channels 38.

The provision of a full width recess means that air can pass to the temperature control unit from the sides and bottom of the vehicle or container whereas in the embodiment of Figure 3 air can only pass from the bottom of the vehicle or container. The channels 38 help direct air into the housing 17.

If the end bulkhead 14 is not provided with an aperture but rather a discharge duct and a return duct through the end bulkhead 14 connect the housing 17 of the temperature control unit 10 to the load-carrying space, then the recess 24 is arranged to communicate with the return duct. This will also be the case if, as in one known arrangement, no housing is provided but rather the temperature control unit is provided in a chamber between the real end bulkhead of the vehicle or container and a false end bulkhead, which forms the end wall of the load-carrying space, ducts again connecting the chamber and the load-carrying space.

The advantages of the invention are illustrated by the following example:-

In a tractor/semi-trailer combination, under EEC rules the maximum length from the king pin connection between the two, to the rearmost point of the body or chossis is 12000 mm, while the maximum radius from the king pin to the frontmost point of the body or fridge unit is 2040 mm. With the smallest known refrigeration unit of sufficient capacity, mounted as shown in the drawings, the maximum inside useable length is 13.2 m. Conventional, 'metric', pallets have the following dimensions: 1200 x 1000 mm.

With known arrangements as shown in Figure 1, twenty-four metric pallets may be carried since for good air flow, the gap 22 must be at least 75 mm. The distance 26 between the rear pallet and the other end wall of the vehicle or container is not sufficient for another pallet.

With the arrangement shown in Figures 2 to 4, the required 75 mm width return path is provided by the recess 24 which means that the full length of the load-carrying space can be employed with the result that two extra pallets can be carried i.e a total of twenty-six pallets.

## Claims

1. A refrigerated vehicle or container having a load-carrying space and a temperature control unit secured to an end bulk head of the load-carrying space and communicating with the load-carrying space, the temperature control unit comprising means for heating and/or cooling air and an air circulation means, wherein a recess is provided in the end bulkhead to provide a return path for air passed to the load-carrying space by the air circulation means.

2. A refrigerated vehicle or container as claimed in Claim 1 wherein the end bulkhead of the load-carrying space is that of the container or vehicle.

3. A refrigerated vehicle or container as claimed in Claim 1 wherein the end bulkhead of the load-carrying space is positioned adjacent the end bulkhead of the container or vehicle such that a space is provided between them, at least part of the temperature control unit being located in the space.

4. A refrigerated vehicle or container as claimed in any preceding claim wherein the temperature control unit is mounted in an aperture in the end bulkhead of the load-carrying space.

5. A refrigerated vehicle or container as claimed in any one of Claims 1 to 3 wherein an aperture is provided in the end bulkhead of the load-carrying space which communicates with the temperature control unit.

6. A refrigerated vehicle or container as claimed in any preceding claim wherein the recess is provided by forming a portion of the end bulkhead of reduced thickness.

7. A refrigerated vehicle or container as claimed in Claim 6 wherein at least the lower half of the end bulkhead of the load-carrying space is made thinner than the remainder of the end bulkhead whereby the recess extends across the full width of the end bulkhead.

8. A refrigerated vehicle or container as claimed in any one of Claims 1 to 5 wherein the recess is provided by forming the end bulkhead with a portion thereof set back out of the plane of the remainder.

9. A refrigerated vehicle or container as claimed in any preceding claim wherein means are provided for dividing the recess into a plurality of channels, so positioned as to help direct air passing along the return path into the temperature control unit.

10. A refrigerated vehicle or container as claimed in any preceding claim wherein means are provided for dividing the load-carrying space into a number of compartments.

EP 0 389 278 A2

Fig. 1.

Fig. 3.

Fig. 2.

Fig. 4.